# EUROPÄISCHE PATENTSCHRIFT

(11) **EP 1 364 517 B1**
(45) Veröffentlichungstag und Bekanntmachung des Hinweises auf die Patenterteilung: **15.09.2004**
(21) Anmeldenummer: 02716605.7
(22) Anmeldetag: 21.02.2002
(51) Int. Cl.: H04L 29/12

(54) **VERFAHREN ZUR BEREITSTELLUNG VON SONDERZEICHEN BEINHALTENDEN INTERNET-ADRESSEN**
METHOD FOR PROVIDING INTERNET ADDRESSES THAT CONTAIN SPECIAL CHARACTERS
PROCEDE POUR PREPARER DES ADRESSES INTERNET CONTENANT DES CARACTERES SPECIAUX

(30) Priorität: 28.02.2001 DE 10110240
(43) Veröffentlichungstag der Anmeldung: 26.11.2003
(73) Patentinhaber: Hasenau, Laszlo P., Dipl.-Ing., 44789 Bochum (DE)
(72) Erfinder: HASENAU, Laszlo, 44789 Bochum (DE)
(74) Vertreter: Griepenstroh, Jörg
(86) Internationale Anmeldenummer: PCT/DE2002/000632
(87) Internationale Veröffentlichungsnummer: WO 2002/069607

(56) Entgegenhaltungen:
- EP-A- 0 817 444
- WO-A-00/56035
- WO-A-99/19814
- WO-A-99/39280
- US-A- 6 012 075
- US-A- 6 092 100

## Beschreibung

Die Erfindung betrifft ein Verfahren zur Bereitstellung von Sonderzeichen beinhaltenden Internet-Adressen (Domains) in einem Computernetzwerk (Internet).

Bei der Anwahl einer Internet-Adresse werden im Browser hinter der Kennung http:// die jeweiligen Internet-Adressen in Form von Buchstaben, Zahlen, Bindestrichen etc. in einer Untermenge des sogenannten ASCII (American Standard Code for Information Interchange) eingegeben. Die Adresse wird mit Hilfe der im Internet befindlichen Domain Name Server (DNS) in einen numerischen Schlüssel transformiert, genannt IP-Adresse (Internet Protokoll-Adresse) und die Kontaktroutine gestartet.

Nachteilig ist, dass Umlaute, aber auch andere Sonderzeichen wie "&" und ähnliche, nicht nutzbar sind. Sie werden allgemein im IT-Bereich und auch im Intemet wegen der Beschränkung der englischen Sprache durch Vokalfolgen ersetzt, also beispielsweise "ü" durch "ue" und "ä" durch "ae". So muss z.B. die Domain für einen Herm Müller in Deutschland durch "mueller.de" ebenso wie ein Firmenname C&A durch "c-und-a.de" substituiert werden. Für eine Zulassung der Sonderzeichen enthaltenden Domains müssten alle bisher in Benutzung befindlichen Rechner und Programme ein Update erfahren. Dies bedeutet jedoch einen schwerwiegenden Eingriff in die bestehende Domain Name System-Struktur. Praktisch wäre dies insbesondere aus wirtschaftlichen Gründen nicht vertretbar. Ein fehlendes Glied in der Informationskette würde ausreichen, um eine Domain, die ein Sonderzeichen enthält, nicht auflösen zu können.

In Computemetzwerken sind eine Vielzahl von Rechnern in einem Verbund zusammengeschlossen. Jeder dieser Rechner muss innerhalb des Netzes eindeutig identifizierbar sein. Im derzeit größten Netz, also im Internet, werden einzelne Rechner (Hosts) durch die sogenannte IP-Adresse eindeutig identifiziert.

Da es für den Menschen schwierig ist, sich viele Host-IP-Adressen zu merken, wurde ein System eingeführt, welches der IP-Adresse einen Domainnamen zuweist. Dieses System heißt Domain Name System. Sogenannte Domain Name Server (DNS) geben Auskunft über die Zuordnung von Domainnamen zu IP-Adressen. Innerhalb des Domain Name Systems sind einige Konventionen bezüglich Domainnamen festgelegt. So starten Label mit einem Buchstaben, enden mit einem Buchstaben oder einer Zahl und haben dazwischen entweder Buchstaben, Zahlen oder Bindestriche. Beispiele sind www.mueller.de, www.bochum.de, www.eu.com oder www.sms.t-online.de.

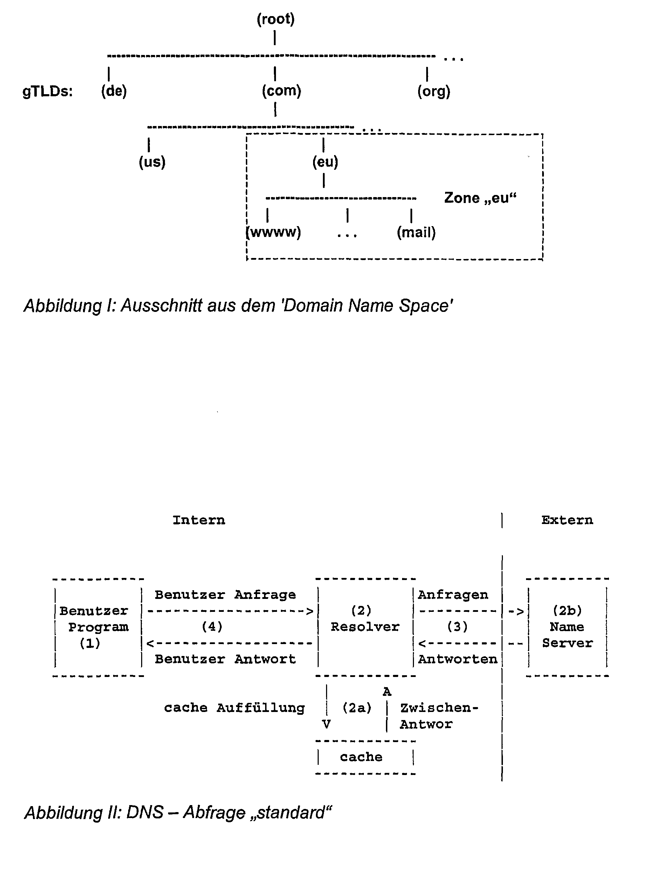

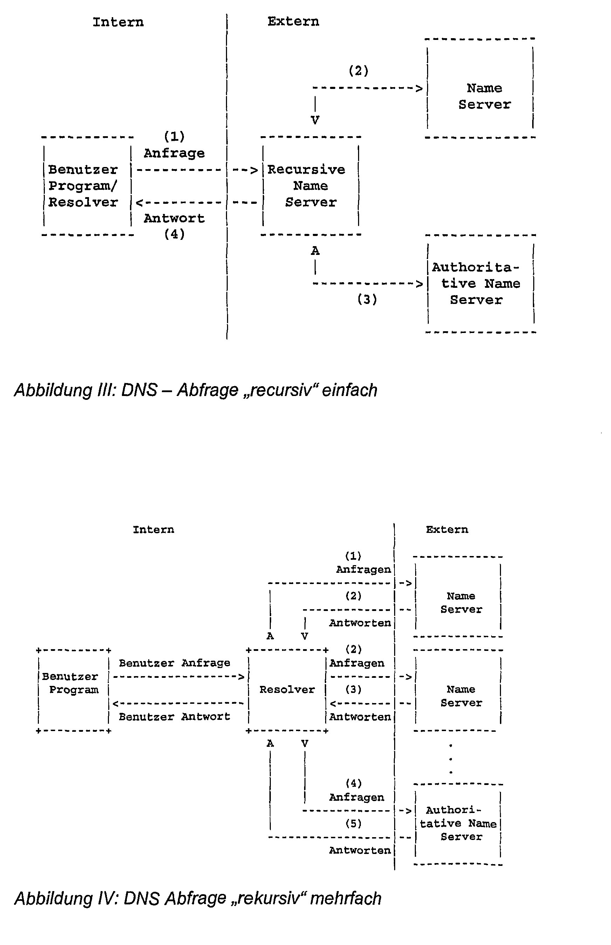

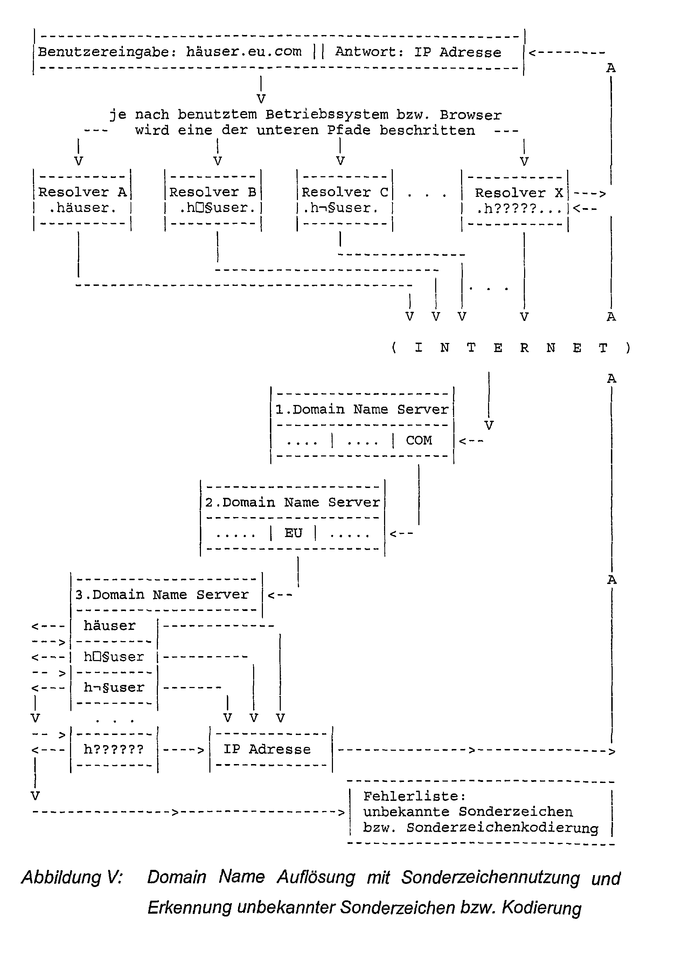

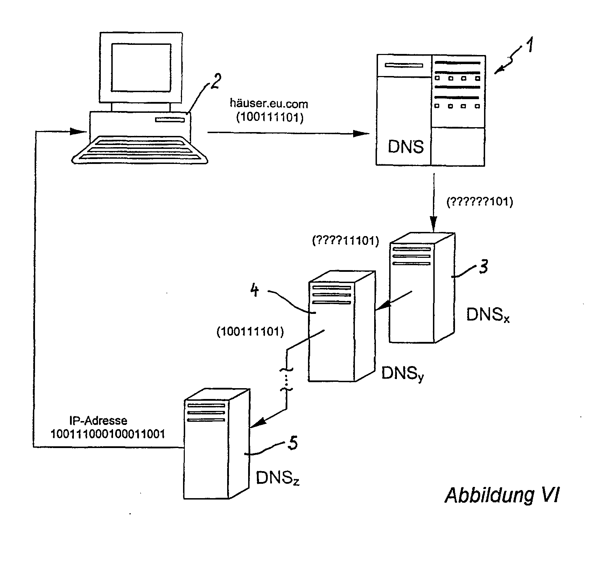

Der Domain Name Space ist als baumartige Struktur angelegt. Ausgehend von der Wurzel (root) folgen die gewöhnliche Top Level Domains (gTLDs) wie "de", "com" oder "org". Diese spalten sich in weitere Subdomains auf. Die folgende Abbildung zeigt einen kleinen Ausschnitt der Toplevel Domain "com" mit den Subdomains "us" und "eu". Schliesslich identifizieren die Blätter des Baumes einzelne Netzwerkresourcen (meist Hosts oder Router), in der Abbildung I z.B. "www" oder "mail".

Die DNS des Domain Name Space verwalten Zonen, die einen Knotenpunkt im Domain Name Space-Baum und alle darunterliegenden Zweige beinhalten. Durch die Existenz von Name Servem auf verschiedenen Tiefen des Baumes überlappen sich die Zonen der verschiedenen DNS. Ein DNS kennt jeweils seinen nächsthöheren und nächsttieferen DNS.

Hauptaufgabe der DNS ist die Zuordnung von IP-Adressen zu Domainnamen und umgekehrt. Ein Benutzerprogramm (z.B. Browser) muss solche Abfragen (Queries) nicht selbst implementieren. Die meisten Betriebssysteme haben diesen Service integriert. Das Benutzerprogramm kann sich mit Hilfe eines Betriebssystem-Aufrufs die Informationen beschaffen. Die eigentliche Query zum DNS übemimmt der Resolver. Zur Leistungssteigerung verfügen alle Resolver über einen lokalen Cache (Zwischenspeicher), damit sie Mehrfachabfragen schneller beantworten können. In Abbildung II ist solch eine Standardabfrage veranschaulicht:

Der Ablauf einer Standard DNS Anfrage stellt sich wie folgt dar:
(1) Ein Benutzer Programm hat einen Domainnamen und möchte die dazugehörige IP-Adresse ermitteln.
(2a) Der Benutzer Programm schickt eine Anfrage an den Resolver und erwartet von diesem eine Antwort.
   Der Resolver überprüft, ob die Antwort bereits im Cache vorhanden ist, falls ja, liefert er die Antwort zurück.
(2b) Falls die Antwort noch nicht im Cache vorhanden war, schickt der Resolver seinerseits eine Query an einen DNS.
(3) Der DNS schickt dem Resolver die gewünschte Antwort zurück.
(4) Der Resolver kopiert die Antwort in seinen Cache und schickt sie gleichzeitig an das Benutzerprogramm.

Es kann aber sein, dass der erste, angefragte DNS keine Antwort auf die Query, die vom Resolver initiiert worden ist, liefern kann. In diesem Fall gibt es zwei Möglichkeiten:

Der erste, angefragte DNS sucht selbständig nach weiteren DNS, die die Query beantworten können. In diesem Fall ändert sich für den Resolver nichts, er wartet einfach, bis er vom "seinem" DNS eine Antwort bekommt. Diese Art von Query nennt man "recursive". Eine recursive-Abfrage ist in Abbildung III dargestellt.

Der Ablauf einer rekursive DNS Abfrage stellt sich wie folgt dar:
(1) Von dem Resolver wird einem bestimmten DNS eine Query geschickt. In dieser Query ist auch die Information enthalten, dass die Query "recursive" durchgeführt werden soll.
(2) Falls der erste, angefragte DNS keine Antwort auf die Query weiss, leitet er die Query an einen anderen DNS weiter, von dem er vermutet, dass dieser eine Antwort liefern könnte.
(3) Falls auch dieser DNS keine Antwort weiss, meldet er dies zurück und gibt ausserdem an, ob er einen DNS kennt, der die Antwort wissen könnte. Dieser Vorgang kann sich mehrere Male wiederholen.
(4) Schliesslich gelangt der erste DNS an einen DNS, der die Antwort kennt. Meist ist dies ein sogenannter Authoritative Name Server.
(5) Die Antwort auf die Query wird an den Resolver zurückgeschickt.

Wenn der erste DNS dem Resolver kein Resultat auf seine Query liefern kann, wird ein anderer DNS vorgeschlagen, den der Resolver nun erneut mit der Query beauftragen muss. Dieses Szenario kann sich mehrmals wiederholen, bis der Resolver schliesslich einen DNS angefragt hat, der ihm eine Antwort liefern kann. Dies ist in Abbildung IV dargestellt.

Die WO 00/56035 behandelt eine Methode zur Internationalisierung von Domains. Hierbei wird ein Zwischenprogramm eingesetzt, welches vom jeweiligen Browser herunter geladen werden muss. Dieses Programm macht aus der Domain eine ASCII-Zeichenfolge und leitet diese weiter. Damit diese vom

Domain Name Server (DNS) identifiziert werden können, muss die Zeichenfolge dort registriert sein. Um eine Sonderzeichen beinhaltende Internet-Adresse zu registrieren, wird diese im Unicode-System eingegeben und in lateinische Buchstaben umgewandelt. Diese Umwandlung heißt RACE, was für Row-based ASCII-Compatible Encoding steht. Die Domain muss folglich beim DNS im ASCII-Code registriert sein, beispielsweise als bq-bhasutr.com, um vom DNS identifiziert werden zu können. Um solche Sonderzeichen enthaltende Domains weltweit zuzulassen, wäre folglich eine Änderung an sämtlichen DNS notwendig. Ferner müssen dann alle Anfragen erst zwecks Überprüfung an einen hochperformanten iDNS-Server geleitet werden, da sonst keine Umsetzung für die darunter liegenden herkömmlichen DNS erfolgen kann.

Aus der WO 00/50966 geht ein Vorschlag hervor, der im Computemetzwerk einen Zwischenserver vorsieht, welcher alle Anfragen entgegennimmt und an den DNS Root Server übersetzt weiterleitet. Hier soll eine Identifizierung vorgenommen werden, die ähnlich der zuvor beschriebenen Vorgehensweise ist. Die IP-Adresse wird an den Zwischenserver zurückgeleitet, welcher dann die Rückmeldung zum Benutzer vornimmt. WO99/19814 offenbart ein verfahren, bei dem falsch geschriebene Internet-Adressen festgestellt und typisiert werden.

Allen vorzitierten Lösungsvorschlägen ist gemein, dass hierfür Änderungen am bestehenden System, also an Netzwerkelementen für den Browser in Form von Zusatzmodulen erforderlich sind oder Änderungen der nicht mit Sonderzeichen zu belastenden DNS notwendig sind, damit die Sonderzeichen im Domainnamen zuverlässig aufgelöst werden können.

Der Erfindung liegt ausgehend vom Stand der Technik die Aufgabe zugrunde, ein Verfahren zur einfachen und wirtschaftlichen Verarbeitung von Sonderzeichen beinhaltenden Schriftzeichen-Codes zur Integration in eine bestehende DNS-Serverstruktur aufzuzeigen, ohne, dass auf Seiten des Requestor-/User-Systems Änderungen erforderlich sind, sowie im Rahmen des Verfahrens einen verbesserten Filtermechanismus aufzuzeigen, mit welchem wiederkehrende unkonventionelle Bestandteile des Schriftzeichen-Codes ermittelt, typisiert und einer Weiterverarbeitung zugeführt werden.

Diese Aufgabe wird durch ein Verfahren gemäß Anspruch 1 gelöst.

Erfindungsgemäß ist ein Verfahren zur Bereitstellung von Sonderzeichen beinhaltenden Internetadressen in einem Computernetzwerk vorgesehen, wobei die Domains bei Aufrufen durch einen Benutzer zunächst in einen Schriftzeichen-Code durch den bestehenden Resolver umgewandelt werden. Dieser Schriftzeichen-Code wird zu einem ersten DNS, den sogenannten Rootserver, übertragen. Bei dem transformierten Schriftzeichen-Code handelt es sich um eine Folge von Binär- oder Hexadezimalzeichen. Falls der Schriftzeichen-Code vom ersten DNS nicht identifiziert werden kann, wird dieser zu mindestens einem weiteren DNS weitergeleitet, auf dem durch eine sequentielle Vergleichsoperation der dem Schriftzeichen-Code entsprechende bekannte numerische Schlüssel (IP-Adresse) ermittelt und dieser zum Benutzer zurück übertragen wird.

Wenn der Schriftzeichen-Code vom ersten DNS teilweise entschlüsselt werden kann, wird dann anhand des erkannten Teilschlüssels ein weiterer DNS kontaktiert, der eine weitere Entschlüsselung vornimmt In dieser Reihenfolge können weitere DNS kontaktiert werden, bis eine vollständige Entschlüsselung der aufgerufenen Internetadresse erfolgt ist, und am Ende als IP-Adresse zum Benutzer übertragen wird.

Eine Internetadresse, beispielsweise häuser.eu.com, würde erfindungsgemäß von hinten nach vorne entschlüsselt (siehe hierzu auch die in den Abbildungen V und VI dargestellten Schaubilder). Der erste kontaktierte DNS erkennt die Endung ".com". Er leitet die Abfrage dann in die nächste Stufe weiter, das heißt, ein weiterer DNS wird kontaktiert, der den Teilschlüssel "eu" erkennt. Der dann noch verbleibende Teilschlüssel der IP-Adresse könnte von einem herkömmlichen DNS nicht identifiziert werden. Sie wäre für ihn im Sinne der Netzwerktechnologie eine unsinnige Zahlenfolge.

Diese unsinnige Zahlenfolge wird auf einem DNS in einer sequentiellen Vergleichsoperation entschlüsselt und hier als unkonventionelle Frage in eine konventionelle Antwort aus einer Zahlenfolge transformiert. Das heißt, dem Schriftzeichen-Code wird anhand der sequentiellen Vergleichsoperation die korrekte IP-Adresse zugeordnet und an den Benutzer zurückübertragen. Der Benutzer gelangt dann auf die von ihm gewünschte Internetseite.

Anhand der Abbildung V ist die erfindungsgemäße Domain Name Auflösung mit Sonderzeichennutzung und Erkennung unbekannter Sonderzeichen bzw. Codierung erläutert.

Ein Benutzer fragt die Domain "häuser.eu.com" ab, und zwar durch Eingabe in seinen Browser. Die das Sonderzeichen "ä" enthaltende Domain wird dann je nach benutztem Browser bzw. Resolver in einen Schriftzeichen-Code umgewandelt, also beispielsweise den durch den Resolver B generierten Schriftzeichen-Code ".h §user". Die Abfrage wird dann an den ersten DNS geleitet, und zwar via Internet. Dieser erkennt die Endung "com". Im zweiten DNS erfolgt eine weitere Entschlüsselung des Schriftzeichen-Codes, wobei der Teilschlüssel "eu" entschlüsselt wird. Schließlich wird im dritten DNS eine sequentielle Vergleichsoperation eine vollständige Entschlüsselung der Binärfolge des Schriftzeichen-Codes erfolgt. Der dritte DNS gibt dann die korrekte IP-Adresse an den Abfragenden bzw. den Benutzer zurück. Für den Fall, dass auch der dritte DNS die abgefragte Domain nicht entschlüsseln kann, ist es möglich, diese in eine Fehlerliste einzutragen. Anhand der Fehlerliste kann dann der Provider des dritten Domain Name Servers entsprechende Maßnahmen ergreifen.

Als eine Domain mit Sonderzeichen ist eine Domain mit Zeichen zu versehen, die außerhalb des Bereichs "A/a" bis "Z/z", "0" bis "9" und die Trennzeichen "., - , @" liegen. Alle internationalen Zeichen sind als Sonderzeichen zu sehen, selbst wenn diese in den ASCII-Bereich "A/a" bis "Z/z" bzw. "0" bis "9" fallen mögen, jedoch im Ursprungsbrowser, d.h. dem Requestor nicht als diese dargestellt wurden.

Die sequentiellen Vergleichsoperationen orientieren sich an einer Zuordnungstabelle, die gemäß der Erfindung die Schlüssel für von verschiedenen Browser/Resolver-Programmen generierten Schriftzeichen-Codes enthält, indem die Zuordnungstabelle kontinuierlich durchlaufen und dort abgelegte Sequenzen mit dem vom Browser/Resolver des Benutzers generierten Schriftzeichen-Codes verglichen werden.

Da Browser bzw. Resolver ein und dieselbe Sonderzeichen beinhaltende Domain in voneinander abweichende Einzeichen- oder Mehrzeichenfolgen umwandeln, könnten solche Einzeichen- oder Mehrzeichenfolgen beinhaltende Schriftzeichen-Codes von den bislang eingesetzten DNS nicht erkannt werden. Ein wesentlicher Vorteil der Erfindung ist dabei, dass für ein Sonderzeichnen nunmehr keine byteweise Zuordnung oder Segmentierung der generierten Schriftzeichen erforderliche ist, sondern vielmehr die Domain bzw. der Schriftzeichen-Code, der Sonderzeichen beinhaltenden Domain als Ganzes, d.h. in voller Länge durch die sequenzielle Vergleichsoperation erkannt wird. Dadurch, dass in der Zuordnungstabelle nunmehr unmittelbar die von den verschiedenen Browsern und/oder Resolvern generierten Schriftzeichen-Codes als ganzes eingetragen sind, können derartige Domains genauso wie den bisherigen Konventionen entsprechende Domains erkannt und in einer Domain Name Server Kette berücksichtigt werden.

Ein weiterer Vorteil ist, dass durch die sequentielle Vergleichsoperation der die Domain mit Sonderzeichen auflösende DNS nur angesprochen wird, wenn tatsächlich Sonderzeichen in der Domain vorhanden sind. Hierdurch wird der die Domains mit Sonderzeichen auflösende DNS entlastet.

Würde das erfindungsgemäße Verfahren bei einem DNS eingesetzt, der keine Sonderzeichen entschlüsseln könnte, würde beim Betreiber des Domain Name Servers eine Fehlermeldung ausgegeben und in eine Fehlerliste eingetragen werden. Anhand dieser Fehlerliste müsste der Betreiber die korrekten, noch nicht richtig codierten Eingaben manuell aussortieren und gegebenenfalls in die Zuordnungstabelle des DNS einpflegen.

Die Ermittlung des korrekten Eintrags der Domain in die Zuordnungstabelle wurde durch eine manuelle Texteingabe im Feld "http:// ...." in den Browsem der einzelnen Hersteller erreicht. Daraufhin wurde geprüft, welchen Schriftzeichen-Code der Browser weitergibt und welche IP-Adresse diesem Schriftzeichen-Code entspricht. Daraufhin erfolgt eine manuelle Zuordnung des Schriftzeichen-Codes zu der korrekten IP-Adresse, wobei der Schriftzeichen-Code dann in die Zuordnungstabelle des DNS eingetragen wird. Dies muß für jede typische Browser-Familie bzw. für jedes Betriebssystem erfolgen, so dass daraus mindestens ein oder im ungünstigsten Fall für jede typische Browser-Familie bzw. Betriebssystem ein Zusatzeintrag in der Zuordnungstabelle des DNS erfolgen musste. Dieses manuelle Verfahren wird durch ein automatisiertes Verfahren, wie es mit den Maßnahmen des Patentanspruchs 1 beschrieben ist, erheblich verbessert. Für diese Maßnahmen wird daher unabhängiger Schutz beansprucht.

Grundlegendes Ziel ist es dabei, eine Fehlerliste entweder zeitverzögert oder auch online zu bearbeiten, mit der Anforderung, offensichtliche Nichterkennungsfehler als mögliche neue Schriftzeichen-Codes und/oder neue unbekannte Browser bzw. Domain Name Abfragen zu erkennen und gegebenenfalls automatisch einen Korrektureintrag in die Zuordnungstabelle des DNS einzufügen. Hierdurch soll erreicht werden, dass zukünftige Anfragen des gleichen Requestors korrekt aufgelöst werden, d.h. die richtige IP-Adresse zugeordnet und zurückübermittelt wird.

Es ist dabei vorgesehen, dass innerhalb eines vorgebbaren Zeitraums an einen DNS gerichtete unkonventionelle Schriftzeichen-Codes als korrekte Anforderungen von IP-Adressen gewertet und gespeichert werden, wobei über einen Algorithmus in den gespeicherten Schriftzeichen-Codes wiederkehrende unkonventionelle Bestandteile ermittelt und typisiert werden. Anschließend dienen die typisierten Bestandteile des Schriftzeichen-Codes als Grundlage für die Erkennung von Schriftzeichen-Codes mit identischen oder ähnlichen Bestandteilen bei den sequentiellen Vergleichsoperationen.

Durch das Sammeln von unkonventiellen, d.h. nicht den bisherigen Konventionen entsprechenden Schriftzeichen-Codes innerhalb eines bestimmten Zeitfensters und der Fiktion, dass die unkonventionellen Schriftzeichen-Codes als korrekte Anforderungen von IP-Adressen zu werten sind, besteht die Möglichkeit, diese Datenmenge gezielt durch einen Algorithmus zu analysieren und insbesondere wiederkehrende unkonventionelle Bestandteile zu ermitteln und diese zu typisieren.

Die Typisierung der Code-Bestandteile kann dabei nach einem oder mehreren Kriterien erfolgen. Zunächst wird dabei geprüft, ob der Bestandteil des Schriftzeichen-Codes einem Anwendungsprogramm, insbesondere einem Browser und/oder Resolver, des Hosts zugeordnet werden kann. Alle empfangenen Adress-Anforderungen von verschiedenen Browsern (Requestoren) werden dabei als richtig eingestuft und der in der Zuordnungstabelle vorgegebenen IP-Adresse zugeordnet. Es können ein oder auch mehrere Einträge in der Zuordnungstabelle vorgenommen werden, falls sich die jeweiligen Anfragen der Requestoren unterscheiden.

Neben den Requestor-spezifischen Besonderheiten oder auch Anomalien sollen nach den Maßnahmen des Patentanspruchs 1 lit. b lokale, d.h. nationale Besonderheiten erkannt werden. Die Browser werden zwar in einer Programmiersprache programmiert, allerdings an der Schnittstelle zum Benutzer mit verschiedenen Zeichensätzen ausgeliefert. Manchmal sind die Browser sogar mehrsprachig und auch in verschiedenen Dialekten ausgeführt. Daher wird bei der Typisierung nach Patentanspruch 1 lit. b geprüft, ob ein bestimmter, die Schriftzeichen-Codes beeinflussender Zeichensatz des Anwendungsprogramms ursächlich für die unkonventionellen Bestandteile des Schriftzeichen-Codes ist.

Weiterhin besteht nach den Maßnahmen des Patentanspruchs 1 lit. c die Möglichkeit zur Prüfung, ob bestimmte, die Schriftzeichen-Codes beeinflussende Parameter des Anwendungsprogramms ursächlich für die unkonventionellen Bestandteile des Schriftzeichen-Codes sind. Die einzelnen Parameter der Anwendungsprogramme bzw. Browser sind durch den Benutzer variierbar. Beispielsweise ist es einem Benutzer möglich, unterschiedliche Zeichensätze zu verwenden. Die Folge davon ist, dass ein und derselbe Requestor insbesondere ein Browser verschiedene parameterspezifische Schriftzeichen-Codes aussenden kann, die von dem DNS erlernt und durch Eintrag in die Zuordnungstabelle der korrekten IP-Adresser zugeordnet werden müssen.

In manchen älteren Betriebssystemen werden nicht zugelassene Zeichen auf die vom Betriebssystem zugelassenen Zeichen beschränkt. Andere Zeichen, insbesondere Sonderzeichen werden einfach unterdrückt. Diese Zeichenunterdrückung kann grundsätzlich ebenfalls als ein gültiger SchriftzeichenCode gewertet werden. Der Schriftzeichen-Code umfasst dabei beispielsweise keine Sonderzeichen mehr, wobei es aber möglich sein muß, auch anhand der restlichen Zeichen diesen Schriftzeichen-Code einer IP-Adresse korrekt zuzuordnen.

Daher ist es nach den Maßnahmen des Patentanspruchs 1 lit. d möglich, zu prüfen, ob ein, die Schriftzeichen-Codes beeinflussendes Betriebssystem auf dem Host verwendet wird, um auf diese Weise betriebssystemspezifische Veränderung des Schriftzeichen-Codes zu erkennen und zu erlernen.

Schließlich ist es auch möglich, dass unkonventionelle Bestandteile des Schriftzeichen-Codes auf den Eingabeort und/oder Übertragungsweg zurückzuführen sind. Nach den Maßnahmen des Patentanspruchs 1 lit. e soll eine, in diese Richtung gehende Prüfung und Typisierung stattfinden.

Insbesondere durch die Unterdrückung und/oder Hinzufügung von Zeichen oder durch Verfälschungen durch ungewollte oder gewollte Maskierungen von einzelnen Bits während der Übertragung ist es möglich, dass sich der Schriftzeichen-Code verändert und von dem empfangenden DNS keine IP-Adresse zugeordnetet werden kann. Durch Variation der Eingabeorte im Netzwerk, insbesondere von verschiedenen Kontinenten kann gegebenenfalls erreicht werden, dass möglichst viele DNS den Schriftzeichen-Code modifizieren. Anhand der Erkennung und Typisierung der Modifikationen ist ein Abgleich der Zuordnungstabelle eines DNS möglich.

Vorteilhaft werden die Ergebnisse der Typisierung als Grundlage für eine automatische Aktualisierung der Zuordnungstabelle des DNS verwendet.

Neben dem in Patentanspruch 1 beschriebenen Verfahren, das sich im wesentlichen in zwei zeitliche Abschnitte gliedert, nämlich einer ersten Phase der Datensammlung und einer zweiten Phase der Datenauswertung, ist es nach den Merkmalen der Patentansprüche 2 bis 10 möglich, Mechanismen vorzusehen, die ein automatisches Auswahlverfahren anstoßen, das gegebenenfalls in Echtzeit ausgeführt werden kann.

Hierbei werden die empfangenen Schriftzeichen-Codes derart bearbeitet, insbesondere gefiltert, dass ausschließlich die im Schriftzeichen-Code benutzten Standard-Zeichen, insbesondere die alphanumerischen Zeichen "A/a" bis "Z/z", "0" bis "9" und die Trennzeichen"-, ., @" einer nachfolgenden sequentiellen Vergleichsoperation der Zuordnungstabelle zugrunde gelegt werden (Patentanspruch 2). Wesentlich hierbei ist, dass in der Zuordnungstabelle entsprechend gefilterte Schriftzeichen-Codes eingetragen sind, so dass eine eindeutige Zuordnung einer neu gestellten gefilterten Anfrage durch eine sequentielle Vergleichsoperation möglich ist.

Dementsprechend ist nach den Maßnahmen des Patentanspruchs 3 vorgesehen, dass bei eindeutig möglicher Zuordnung des gefilterten Schriftzeichen-Codes zu einer IP-Adresse der Zuordnungstabelle, diese Zuordnung erfolgt und die IP-Adresse dem Requestor übermittelt wird.

Da aber eine eindeutige Zuordnung des gefilterten Schriftzeichen-Codes möglich ist, ist eine Filterung des Schriftzeichen-Codes für die nächste Anfrage überflüssig, so dass nach den Maßnahmen des Patentanspruchs 4 vorgesehen ist, den ungefilterten Schriftzeichen-Code in die Zuordnungstabelle aufzunehmen. Hierdurch wird die Filteroperation eingespart und es ist eine schnellere Zuordnung des Schriftzeichen-Codes zu dem Eintrag der Zuordnungstabelle möglich.

Gegenstand des Patentanspruchs 5 ist es, dass jeder IP-Adresse der Zuordnungstabelle eine variierbare Wertigkeit zugeordnet wird. Die Wertigkeit einer IP-Adresse muss dabei nicht zwangsläufig variieren, kann aber, in Abhängigkeit von verschiedenen Einflussfaktoren erhöht oder herabgesetzt werden. Ein wichtiger Faktor ist hierbei die Aufrufhäufigkeit einer IP-Adresse (Patentanspruch 6). Während die Anzahl der Zugriffe auf eine IP-Adresse in der Regel bei den Internet-Service-Providern registriert wird, ist es auch denkbar, die Häufigkeit eines Aufrufs einer bestimmten IP-Adresse in den DNS zu registrieren und einer IP-Adresse der Zuordnungstabelle eine, der Aufrufhäufigkeit entsprechende Wertigkeit zuzuordnen.

Hierdurch ergibt sich die Möglichkeit, dass bei nicht eindeutig möglicher Zuordnung eines gefilterten Schriftzeichen-Codes zu einer IP-Adresse der Zuordnungstabelle dem Host, d.h. dem Requestor alle in Frage kommenden Zuordnungen zur Online-Auswahl übermittelt werden (Patentanspruch 7). Diese Online-Auswahl kann sich dabei hinsichtlich der Reihenfolge an der Wertigkeit der möglichen Zuordnungen orientieren, die dem Requestor von dem DNS mitgeteilt werden (Patentanspruch 8). Die IP-Adresse mit der höchsten Wertigkeit insbesondere die IP-Adresse mit den meisten Aufrufen wird dabei als erste IP-Adresse aufgeführt, da die Wahrscheinlichkeit am größten ist, dass der Benutzer/Requestor ebenfalls auf diese Adresse zugreifen möchte. Die Auswahl des Benutzers wird vom DNS protokolliert, wodurch dem Schriftzeichen-Code eine korrekte IP-Adresse automatisch und vor allen Dingen online zugeordnet werden kann. Durch die Protokollierung auf Seiten des Host-Rechners/Requestors kann beim nächsten Aufruf dieses Domain Names bereits die richtige Website mit der korrekten IP-Adresse ohne Umwege über die vom DNS initiierte Auswahlmaske erhalten werden.

Optional ist nach den Maßnahmen des Patentanspruchs 9 möglich, dass bei nicht eindeutig möglicher Zuordnung des gefilterten Schriftzeichen-Codes zu einer IP-Adresse, dem Schriftzeichen-Code diejenige IP-Adresse zugeordnet wird, welche die höchste Wertigkeit besitzt. Diese Art der Zuordnung ist besonders einfach und führt schnell zu einem Ergebnis. Ob dies Ergebnis für den Requestor tatsächlich befriedigend ist, hängt davon ab, ob dieser tatsächlich die IP-Adresse mit der höchsten Wertigkeit aufrufen wollte oder nicht. Dieses Verfahren eignet sich insbesondere dann, wenn IP-Adressen mit sehr stark unterschiedlicher Wertigkeit in der Zuordnungstabelle vorhanden sind, so dass die überwiegende Wahrscheinlichkeit für einen Aufruf der IP-Adresse mit der höheren Wertigkeit spricht.

Bei einer großen Anzahl möglicher Zuordnungen oder bei Zuordnungen mit im wesentlichen gleichen Wertigkeiten ist es nach den Maßnahmen des Patentanspruchs 10 von Vorteil, wenn selbsttätig eine, der in den Patentansprüchen 5 bis 9 beschriebenen Maßnahmen von einer Entscheidungsroutine initiiert ausgeführt wird. Dies soll in Abhängigkeit von der Anzahl der möglichen Zuordnungen bei Überschreiten einer vorgebbaren Anzahl und/oder bei Überschreiten einer Wertigkeitsdifferenz geschehen. Sind beispielsweise fünf IP-Adressen gleicher Wertigkeit in der Zuordnungstabelle vorhanden, ist es zweckmäßig, dem Host/Requestor alle in Frage kommenden Zuordnungen zur Online-Auswahl zu übermitteln. Sind allerdings nur zwei Einträge in der Zuordnungstabelle vorhanden, wobei ein Eintrag eine sehr hohe Wertigkeit besitzt und ein anderer Eintrag eine verschwindend geringe Wertigkeit, ist es zweckmäßiger, nach den Maßnahmen des Patentanspruchs 9 vorzugehen, wobei dem übermittelten Schriftzeichen-Code diejenige IP-Adresse zugeordnet wird, welche die höhere Wertigkeit besitzt. Dabei kann dahingestellt sein, auf welche Art und Weise die Wertigkeit festgelegt wird.

Sollten Schriftzeichen-Codes durch sequentielle Vergleichsoperationen und/oder Typisierung nach einem der in den Patentansprüchen 1 bis 10 beschriebenen Verfahren einer IP-Adresse der Zuordnungstabelle nicht zugeordnet werden können, ist es im Rahmen der Erfindung möglich, dass dieser Schriftzeichen-Code einer Fehlerliste für die manuelle Nachbearbeitung zugeführt wird.

Gegenstand des Patentanspruchs 11 ist, dass ein Schriftzeichen-Code nach seiner Zuordnung durch den DNS im Cache des Requestors zwischengespeichert wird. Dies ermöglicht eine Entlastung des Sonderzeichen auflösenden DNS und einen beschleunigten Zugriff des Requestors auf die gewünschte Domain. Somit wird keine neue Kontaktierung des speziellen Domain Name Server (vgl. 3. Domain Name Server in Abbildung V) beim Wiederaufrufen erforderlich.

Das Verfahren und auch das zugrundeliegende Computemetzwerk sind technisch generalisiert in dem Schaubild gemäß Abbildung VI dargestellt. Das Computemetzwerk weist einen ersten Domain Name Server (1) auf, welcher bei Aufrufen einer Internetadresse durch einen Benutzer von einem Computer (2) aus kontaktiert wird. Der erste DNS 1 kann aus dem aus der Internet-Adresse generierten Schriftzeichen-Code einen Teilschlüssel identifizieren, nämlich die Endung ".com". Die Abfrage wird dann mit dem Teilschlüssel, hier dargestellt durch (??????101) an den DNSₓ (3) weitergeleitet. Dieser ist in der Lage, den Teilschlüssel ".eu.com" zu erkennen entsprechend dem Teilschlüssel (????11101). Dieser Teilschlüssel wird dann zum DNS_{y} (4) übertragen, wo eine weitere Entschlüsselung erfolgt. Am Ende der Kette wird der DNS_{z} (5) kontaktiert, welcher der Authoritative Nameserver ist, wo mit Hilfe der sequentiellen Vergleichsoperation auf die korrekte IP-Adresse gezeigt wird. Der nun so ermittelte bekannte numerische Schlüssel (IP-Adresse) wird an den Benutzer übertragen. Der Benutzer gelangt dann auf die von ihm angewählte Internetseite.

Durch die Erfindung können Internet-Adressen nutzbar gemacht werden, die Sonderzeichen enthalten, ohne dass hierfür dem Domain Name Root-Server oder den Requestoren wie z.B. den Browsern zusätzliche Transformationsmodule zugeordnet werden müssen oder dass hier jeder einzelne Domain abgespeichert werden müsste. Durch die Kettenentschlüsselung muss im DNS_{z} (5) anhand der Zuordnung über die Baumstruktur nur der Teil der Domain entschlüsselt werden, der vor den vorgeschalteten Domain Name Servern 1, 3 und 4 nicht identifiziert werden konnte.

### Bezugszeichenaufstellung

- 1 -: DNS
- 2 -: Computer
- 3 -: DNSₓ
- 4 -: DNS_{y}
- 5 -: DNS_{z}

## Patentansprüche

1. Verfahren zur Bereitstellung von Sonderzeichen beinhaltenden Internetadressen, Domains, in einem Computernetzwerk (Internet), wobei die Domains bei Aufrufen durch einen Benutzer zunächst in einen Schriftzeichen-Code umgewandelt werden, der zu einem ersten Domain Name Server, DNS, (1) übertragen wird und falls der Schriftzeichen-Code vom ersten DNS (1) nicht identifiziert werden kann, dieser vom ersten DNS (1) zu mindestens einem weiteren DNS (5) weitergeleitet wird, auf dem der Schriftzeichen-Code unter Auswertung einer sequentiellen Vergleichsoperation entschlüsselt wird, und für den Fall, dass der Schriftzeichen-Code vom ersten DNS (1) teilweise entschlüsselt wird, anhand des erkannten Teilschlüssels mindestens ein weiterer DNS (3-5) kontaktiert wird, weicher eine weitere Entschlüsselung vornimmt, worauf dem Schriftzeichen-Code ein bekannter numerischer Schlüssel, IP-Adresse, zugeordnet und dieser zum Benutzer zurückübertragen wird, wobei die sequentielle Vergleichsoperation anhand einer Zuordnungstabelle die Schlüssel für den von verschiedenen Browsern und/oder Resolvern generierten Schriftzeichen-Code erkennt und innerhalb eines vorgebbaren Zeitraums an einen DNS gerichtete unkonventionelle Schriftzeichen-Codes als korrekte Anforderungen von IP-Adressen gewertet und gespeichert werden, wobei über einen Algorithmus in den gespeicherten Schriftzeichen-Codes wiederkehrende unkonventionelle Bestandteile ermittelt und typisiert werden und anschließend die typisierten Bestandteile des Schriftzeichen-Codes als Grundlage für die Erkennung von Schriftzeichen-Codes mit identischen oder ähnlichen Bestandteilen bei den sequentiellen Vergleichsoperationen dienen und wobei die Ergebnisse der Typisierung als Grundlage für eine automatische Aktualisierung der Zuordnungstabelle des DNS verwendet werden, **dadurch gekennzeichnet, dass** die Typisierung der Code-Bestandteile hinsichtlich einer oder mehrerer der nachfolgenden Kriterien erfolgt:
a) Prüfung, ob der Bestandteil des Schriftzeichen-Codes einem Anwendungsprogramm, insbesondere einem Browser und/oder Resolver, des Requestors zugeordnet werden kann;
b) Prüfung, ob ein bestimmter, die Schriftzeichen-Codes beeinflussender Zeichensatz des Anwendungsprogramm ursächlich für die unkonventionellen Bestandteile des Schriftzeichen-Codes ist;
c) Prüfung, ob bestimmte, die Schriftzeichen-Codes beeinflussende Parameter des Anwendungsprogramms ursächlich für die unkonventionellen Bestandteile des Schriftzeichen-Codes sind;
d) Prüfung, ob ein die Schriftzeichen-Codes beeinflussendes Betriebssystem auf dem Host/Requestor verwendet wird;
e) Prüfung, ob ein die Schriftzeichen-Codes beeinflussender Eingabeort und/oder Übertragungsweg ursächlich für die unkonventionellen Bestandteile des Schriftzeichen-Codes ist.

2. Verfahren nach Anspruch 1, bei welchem der von einem DNS (1-5) empfangene Schriftzeichen-Code hinsichtlich verwendeter Sonderzeichen gefiltert wird, wobei ausschließlich die im Schriftzeichen-Code benutzten Standardzeichen, insbesondere die alphanumerischen Zeichen "A" bis "Z", "0" bis "9" und "-", einer nachfolgenden sequentiellen Vergleichsoperation der Zuordnungtabelle zugrunde gelegt werden.

3. Verfahren nach Anspruch 2, **dadurch gekennzeichnet, dass**, bei eindeutig möglicher Zuordnung des gefilterten Schriftzeichen-Codes zu einer IP-Adresse der Zuordnungstabelle, diese Zuordnung erfolgt und die IP-Adresse dem Requestor übermittelt wird.

4. Verfahren nach Anspruch 3, **dadurch gekennzeichnet, dass** bei eindeutiger Zuordnung des gefilterten Schriftzeichen-Codes, der ungefilterte Schriftzeichen-Code in den DNS aufgenommen wird.

5. Verfahren nach einem der Ansprüche 1 bis 4, **dadurch gekennzeichnet, dass** jeder IP-Adresse der Zuordnungstabelle eine variierbare Wertigkeit zugeordnet wird

6. Verfahren nach Anspruch 5, **dadurch gekennzeichnet, dass** die Häufigkeit eines Aufrufs einer IP-Adresse der Zuordnungstabelle registriert und der IP-Adresse eine der Aufrufhäufigkeit entsprechende Wertigkeit zugeordnet wird.

7. Verfahren nach Anspruch 2, **dadurch gekennzeichnet, dass** bei nicht eindeutig möglicher Zuordnung des gefilterten Schriftzeichen-Codes zu einer IP-Adresse der Zuordnungstabelle, dem Requestor alle in Frage kommenden Zuordnungen zur Online-Auswahl übermittelt werden.

8. Verfahren nach Anspruch 7, **dadurch gekennzeichnet, dass** im DNS die in Frage kommenden Zuordnungen in der Reihenfolge ihrer Wertigkeit aufgeführt werden.

9. Verfahren nach Anspruch 5, **dadurch gekennzeichnet, dass**, bei nicht eindeutig möglicher Zuordnung des gefilterten Schriftzeichen-Codes zu einer IP-Adresse, dem Schriftzeichen-Code diejenigen IP-Adresse zugeordnet wird, welche die höchste Wertigkeit besitzt.

10. Verfahren nach einem der Ansprüche 5 bis 9, **dadurch gekennzeichnet, dass** in Abhängigkeit von der Anzahl der möglichen Zuordnungen bei Überschreiten einer vorgegebenen Anzahl und/oder Wertigkeitsdifferenz selbsttätig eine der in den Patentansprüchen 5 bis 9 beschriebenen Maßnahmen ausgeführt wird.

11. Verfahren nach einem der Ansprüche 1 bis 10, **dadurch gekennzeichnet, dass** ein Schriftzeichen-Code nach seiner Zuordnung durch den DNS im Cache des Requestors zwischengespeichert wird.

## Claims

1. A method of preparing Internet addresses, domains, containing special characters, in a computer network (Internet), wherein the domains, when addressed by a user, are first converted to a character code which is transmitted to a first domain name server, DNS, (1) and, if the character code cannot be identified by the first DNS (1), it is passed on by the first DNS (1) to at least one other DNS (5) on which the character code is decoded by the use of a sequential comparison operation, and if the character code is partially decoded by the first DNS (1) at least one other DNS (3 - 5) is contacted by reference to the recognised partial key, said additional DNS carrying out further decoding, whereupon a known digital key, IP address, is associated with the character code and is transmitted back to the user, the sequential comparison operation recognising, by reference to an association table, the key for the character code generated by different browsers and/or resolvers and within a presettable period of time unconventional character codes directed to a DNS are evaluated and stored as correct requirements of IP-addresses, unconventional constituents which recur in the stored character code being detected by way of an algorithm and tagged and then the tagged constituents of the character code serve as a basis for the recognition of character codes with identical or similar constituents during the sequential comparison operations and the results of the tagging are used as a basis for an automatic updating of the association table of the DNS, **characterised in that** the tagging of the code constituents is effected in respect of one or more of the following criteria:
a) a check as to whether the constituent of the character code can be associated with an applications program, particularly a browser and/or resolver, of the requester;
b) a check as to whether a specific applications program character set which influences the character codes is responsible for the unconventional constituents of the character code;
c) a check as to whether specific applications program parameters which influence the character codes are responsible for the unconventional constituents of the character code;
d) a check as to whether an operating system which influences the character codes is used on the host/requester;
e) a check as to whether an inputting location and/or transmission path which influences the character codes is responsible for the unconventional constituents of the character code.

2. A method according to claim 1, wherein the character code received by a DNS (1 - 5) is filtered in respect of special characters used, only those standard characters, particularly the alphanumeric characters "A" to "Z", "0" to "9" and "-", which are used in the character code being taken as the basis for a subsequent sequential comparison operation of the association table.

3. A method according to claim 2, **characterised in that** if it is clearly possible to associate the filtered character code with an IP address of the association table, such association is effected and the IP address is transmitted to the requester.

4. A method according to claim 3, **characterised in that** if the filtered character code can be clearly associated, the unfiltered character code is received in the DNS.

5. A method according to any one of claims 1 to 4, **characterised in that** a variable ranking is associated with each IP address of the association table.

6. A method according to claim 5, **characterised in that** the frequency of addressing an IP address in the association table is recorded and a ranking corresponding to the addressing frequency is associated with the IP address.

7. A method according to claim 2, **characterised in that** if it is not possible clearly to associate the filtered character code with an IP address of the association table, all the relevant associations are transmitted to the requester for on-line selection.

8. A method according to claim 7, **characterised in that** the relevant associations are carried out in the DNS in the sequence of their rankings.

9. A method according to claim 5, **characterised in that** if it is not possible clearly to associate the filtered character code with an IP address, there is allocated to the character code that IP address which has the highest ranking.

10. A method according to any one of claims 5 to 9, **characterised in that** depending upon the number of possible associations, if a preset number and/or ranking difference is exceeded, one of the steps described in claims 5 to 9 is carried out automatically.

11. A method according to any one of claims 1 to 10, **characterised in that** after its being associated by the DNS a character code is staged in the requester's cache.

## Revendications

1. Procédé pour la préparation d'adresses Internet contenant des caractères spéciaux, les domaines, dans un réseau informatique (Internet), dans lequel les domaines, lors de l'appel par un utilisateur, sont d'abord convertis en un code de caractères qui est transmis à un premier système de nom par domaine, DNS (1), et, dans le cas où le code de caractères ne peut pas être identifié par le premier DNS (1), il est transmis par le premier DNS (1) à au moins un autre DNS (5) à partir duquel le code de caractères est décodé au moyen d'une opération de comparaison séquentielle, et, pour le cas où le code de caractères est partiellement décodé par le premier DNS (1), au moins un autre DNS (3-5) est contacté au moyen des éléments de clé reconnus, lequel poursuit le décodage à partir duquel une clé numérique connue, l'adresse IP, est affectée au code de caractères, puis retransmise à l'utilisateur, sachant que l'opération de comparaison séquentielle reconnaît, au moyen d'un tableau d'affectation, les clés pour le code de caractères généré par des navigateurs et/ou des résolveurs différents et des codes de caractères non conventionnels adressés à un DNS à l'intérieur d'une période prédéfinissable sont considérés et enregistrés comme des demandes correctes d'adresses IP, sachant que des composants non conventionnels se répétant dans le code de caractères enregistré sont déterminés et typés au moyen d'un algorithme, puis les composants typés du code de caractères servent de base pour la reconnaissance des codes de caractères avec des composants identiques ou semblables lors de l'opération de comparaison séquentielle et sachant que les résultats du typage sont utilisés comme base pour une actualisation automatique du tableau d'affectation du DNS, **caractérisé en ce que** le typage des composants du code pour ce qui est d'un ou de plusieurs des critères ci-après a lieu :
a) Contrôle pour vérifier si le composant du code de caractères peut être affecté à un programme d'application du demandeur, notamment à un navigateur et/ou à un résolveur ;
b) Contrôle pour vérifier si un jeu de caractères précis, qui influence les codes de caractères, du programme d'application est la cause des composants non conventionnels du code de caractères ;
c) Contrôle pour vérifier si des paramètres précis, qui influencent le code de caractères, du programme d'application sont la cause des composants non conventionnels du code de caractères ;
d) Contrôle pour vérifier si un système d'exploitation influençant les codes de caractères est consacré à l'hôte/au demandeur ;
e) Contrôle pour vérifier si un lieu d'entrée et/ou un chemin d'accès influençant les codes de caractères est la cause des composants non conventionnels du code de caractères.

2. Procédé selon la revendication 1, avec lequel le code de caractères reçu par un DNS (1-5) est filtré pour ce qui est des caractères spéciaux utilisés, sachant que l'opération de comparaison séquentielle suivante du tableau d'affectation se base uniquement sur les caractères standard utilisés dans le code de caractères, notamment les caractères alphanumériques « A » à « Z », « 0 » à « 9 » et « - ».

3. Procédé selon la revendication 2, **caractérisé en ce que**, dans le cas de l'affectation clairement possible du code de caractères filtré à une adresse IP du tableau d'affectation, cette affectation a lieu et l'adresse IP est communiquée au demandeur.

4. Procédé selon la revendication 3, **caractérisé en ce que**, dans le cas de l'affectation manifeste du code de caractères filtré, le code de caractères non filtré est reçu dans le DNS.

5. Procédé selon l'une quelconque des revendications 1 à 4, **caractérisé en ce qu'**une valence variable est affectée à chaque adresse IP du tableau d'affectation.

6. Procédé selon la revendication 5, **caractérisé en ce que** la fréquence d'un appel d'une adresse IP du tableau d'affectation est enregistrée et une valence correspondant à la fréquence d'appel est affectée à l'adresse IP.

7. Procédé selon la revendication 2, **caractérisé en ce que**, dans le cas d'une affectation pas clairement possible du code de caractères filtré à une adresse IP du tableau d'affectation, toutes les affectations entrant en ligne de compte pour la sélection en ligne sont transmises au demandeur.

8. Procédé selon la revendication 7, **caractérisé en ce que** dans le DNS, les affectations entrant en ligne de compte sont listées en fonction de leur valence.

9. Procédé selon la revendication 5, **caractérisé en ce que**, dans le cas d'une affectation pas clairement possible du code de caractères filtré à une adresse IP, les adresses IP possédant la valence la plus élevée sont affectées au code de caractères.

10. Procédé selon l'une quelconque des revendications 5 à 9, **caractérisé en ce que**, en fonction du nombre d'affectations possibles, l'une des mesures décrites dans les revendications 5 à 9 est automatiquement exécutée lorsqu'un nombre prédéfini et/ou une différence de valence est dépassé(e).

11. Procédé selon l'une quelconque des revendications 1 à 10, **caractérisé en ce qu'**un code de caractères est enregistré provisoirement après son affectation au moyen du DNS dans la mémoire cache du demandeur.
